# EUROPEAN PATENT SPECIFICATION

(11) **EP 0 616 406 B1**
(45) Date of publication and mention of the grant of the patent: **04.06.1997**
(21) Application number: 94103228.6
(22) Date of filing: 03.03.1994
(51) Int. Cl.: H02J 1/10, H02B 7/06, H02J 3/00, H02J 4/00

(54) **Compound type electric power receiving and transforming installation**
Zusammengesetzte Vorrichtung zum Empfang und zur Transformierung elektrischer Energie
Installation de réception et de transformation d'énergie électrique de type composée

(30) Priority: 17.03.1993 JP 56795/93
(43) Date of publication of application: 21.09.1994
(73) Proprietor: HITACHI, LTD., Chiyoda-ku, Tokyo 101 (JP)
(72) Inventor: Ito, Akira, Nakagun, Ibaraki 311-01 (JP); Ooshima, Masabumi, Hitachi-shi, Ibaraki 316 (JP); Tanaka, Toyokazu, Hitachi-shi, Ibaraki 316 (JP); Tanimizu, Toru, Hitachi-shi, Ibaraki 319-12 (JP); Saito, Masao, Hitachi-shi, Ibaraki 316 (JP)
(74) Representative: Strehl Schübel-Hopf Groening & Partner

(56) References cited:
- EP-A- 0 513 828
- WO-A-93/04515
- FR-A- 2 680 919
- REVUE GENERALE DE L'ELECTRICITE., no.7, July 1987, PARIS FR pages 23 - 26 MASSON 'Le poste intérieur modulaire compartimenté: un appareillage de type convemtionnel spécialement adapté.'
- REVUE GENERALE DE L'ELECTRICITE., no.7, July 1987, PARIS FR pages 27 - 31 DE LA SELLE 'Le poste intérieur modulaire compartimenté: une technologie performante et économique.'
- PATENT ABSTRACTS OF JAPAN vol. 15, no. 9 (E-1021) 9 January 1991 & JP-A-22 062 808 (TOSHIBA CORP.) 25 October 1990

## Description

### Background of the Invention

### Field of Industrial Application

The present invention relates to a compound type electric power receiving and transforming installation and, in particular, relates to a compound type electric power receiving and transforming installation which can be freely laid out in response to customer's requirement with regard to the customer's site and the building configuration.

### Conventional Art

Large scale buildings and factories are supplied with electric power from electric power supply companies via their electric power receiving and transforming installations and are identified as an extra-high voltage consumer or a high voltage consumer depending on the voltage levels of the receiving electric power. The electric power receiving and transforming installation as referred to above is one which is constituted by a transformer, a switch gear unit, an electric energy measuring apparatus and a switch board as its major constitutions and supplies electric power, and, in particular one in which these constitutions are constituted in a unit is called as a compound type electric power receiving and transforming installation. JP-A-2-262808(1990) discloses such compound type electric power receiving and transforming installation.

Although an electric power receiving and transforming installation is an important facility for an extra-high voltage consumer or a high voltage consumer for supplying electric power to the loads within the site, the installation is generally and frequently located at a corner of the customer's site. For example, in case of a department store, the electric power receiving and transforming installation is disposed at an innoticable place such as underground floor and further it is required to minimized the space occupied by such electric power receiving and transforming installation so as to obtain a maximum store space. Under the above explained background, the compound type electric power receiving and transforming installation is designed to efficiently dispose such devices as a transformer unit, a switch gear unit, an electric energy measuring apparatus and a switch board from a view point to minimize the site area.

An electric power receiving and transforming installation is generally disposed at a site prepared by a customer such that the site is not necessarily matched with the configuration of a compound type electric power receiving and transforming installation. For this reason, in actual practice the lay-outs of respective electric power receiving and transforming installations are each time redesigned depending on the site conditions of the customers (rectangular shape, square shape, a space including many pillars or outdoor space). Further, a capacity increase of an already installed electric power receiving and transforming installation is sometimes required in association with an electric power load increase. In such instance even if the site area is ensured, a review of the lay-out will be necessitated, which implies, when looking at from the customer side, to prolong the interval from an order, installation, to a startup and further which accompanies an expanded power service interruption during extending the installation.

With regard to this matter, the above mentioned prior art has not fully investigated countermeasues for solving the problems.

### Summary of the Invention

Accordingly, an object of the present invention is to provide a compound type electric power receiving and transforming installation which has a large lay-out freedom in response to site shapes, electric power receiving conditions and extending requirements of customers.

This object is met by an unit according to claim 1. Preferred embodiments are disclosed in the depending claims. According to the present invention transformer units are closely disposed at the back side of aligned switch board units in the longitudinal direction of the switch board units and switch gear units are closely disposed in a direction perpendicular to the longitudinal direction of the switch board units in such a manner to form a substantially rectangular shape as a whole.

With the above constitution, it is possible to gather operating panels of the switch boards and the switch gear units on a same side as well as many kinds of modifications thereof are feasible.

### Brief Description of the Drawings

Fig.1 is a diagram illustrating a compound type electric power receiving and transforming installation of one circuit line and one bank constitution which is a fundamental constitution of the compound type electric power receiving and transforming installation according to the present invention ;
Fig.2 is a diagram illustrating an electrical circuit of the fundamental constitution as shown in Fig.1 ;
Fig.3 is an arrangement diagram when constituting the switch gear unit of the compound type electric power receiving and transforming installation as shown in Fig.1 in a form of GIS ;
Fig.4 is an arrangement diagram of the compound type electric power receiving and transforming installation as shown in Fig.1 when looked at from B face ;
Fig.5 is a diagram illustrating an electrical circuit of a compound type electric power receiving and transforming installation of two circuit line and two bank constitution ;
Fig.6 is an arrangement diagram when constituting the switch gear unit of the compound type electric power receiving and transforming installation as shown in Fig.5 in a form of GIS ;
Fig.7 is a diagram illustrating the GIS arrangement at the second row in Fig.6 when looked at from A face side ;
Fig.8 is a diagram of an outdoor type installation by disposing the compound type electric power receiving and transforming installation of two circuit line and two bank constitution as shown in Fig.6 in a cubicle ;
Fig.9 is an electrical circuit diagram when arranged linearly a compound type electric power receiving and transforming installation of two circuit line and two bank constitution ;
Fig.10 is an arrangement diagram when constituting the switch gear unit of the compound type electric power receiving and transforming installation as shown in Fig.9 in a form of GIS ;
Fig.11 is a diagram illustrating the GIS arrangement when taken along the cross sectional line Z1-Z1 in Fig.10 ;
Fig.12 is a diagram illustrating the GIS arrangement when taken along the cross sectional line Z2-Z2 in Fig.10 ;
Fig.13 is a diagram illustrating a modified embodiment of two PCT system when the same is arranged linearly ;
Fig.14 is a diagram illustrating another modified embodiment when the same is arranged arcuately ;
Fig.15 is an electrical circuit diagram of a two circuit line and three bank system ;
Fig.16 is the constitutional diagram of the GIS arrangement of Fig.15 ;
Fig.17 is an electrical circuit diagram of a two circuit line and four bank system ;
Fig.18 is the constitutional diagram of the GIS arrangement of Fig.17 ;
Fig.19 is a constitutional diagram of two circuit line and one bank system in GIS arrangement ; and
Fig.20 is the electrical circuit diagram of the system as shown in Fig.19.

### Description of the Embodiments

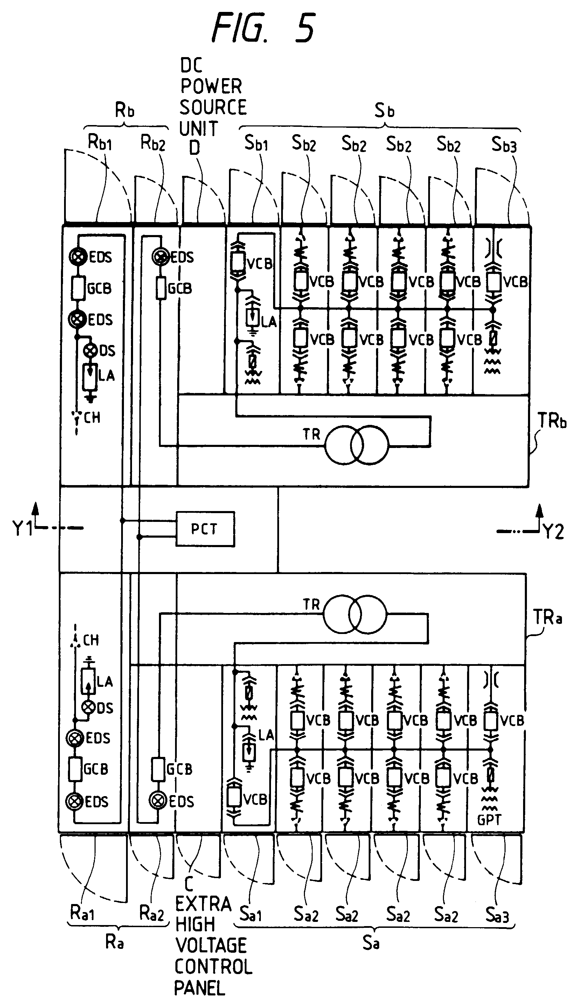

An electric power receiving and transforming installation is constituted by a transformer, a switch gear unit, an electric energy measuring apparatus and a switch board as its major constituents and is configurated generally and frequently in a form of two circuit line and two bank constitution. The two circuit line and two bank constitution referred to above is one as shown in Fig.5 which is constituted by two sets of transformers TRa, TRb, two sets of switch gear units Ra, Rb, one electric energy measuring apparatus (hereinafter, simply called as PCT) and a plurality of switch board clusters Sa, Sb wherein electric power is received respectively from two sets of switch gear units Ra and Rb, thereafter introduced to the common PCT, then branched to the two sets of transformers TRa and TRb from the PCT and is supplied to a load from the two sets of transformers via a plurality of the switch board clusters Sa, Sb. In such constitution, the two circuit lines implies to receive electric power respectively from the two sets of switch gear untis Ra and Rb and the two banks implies to provide the two sets of transformers TRa and TRb.

Further, other than the above constitution, there are one circuit line and one bank constitution, one circuit line and two bank constitution, two circuit line and three bank constitution and two circuit line and four bank constitution. The structures of these constitutions will be easily understood in view of the above explanation on the two circuit line and two bank constitution, and, for example, the two circuit line and three bank constitution implies that electric power is received respectively from the two sets of switch gear units and three sets of transformers are provided. Still further, specific combinations of these constitutions or details of thses constitutions will be explained in detail in connection with the following embodiments.

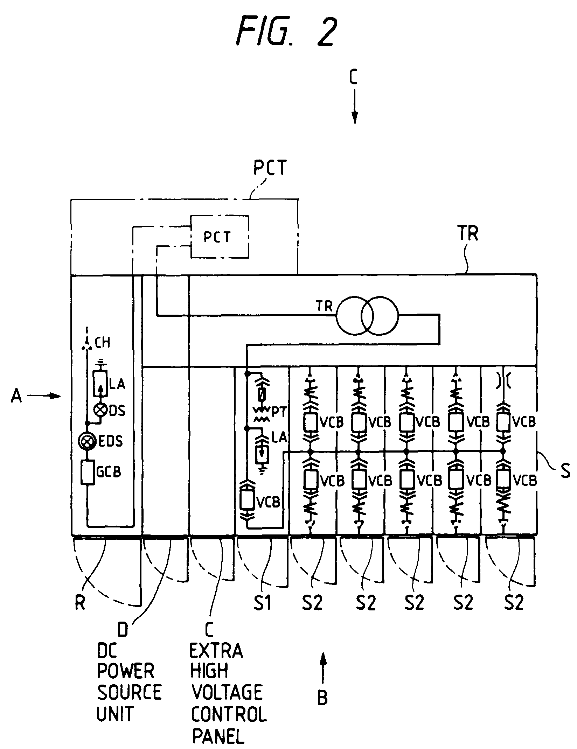

Hereinbelow, the compound type electric power receiving and transforming installation according to the present invention is explained by taking an example of one circuit line and one bank constitution which is a basic constitution. Fig.2 shows an electrical circuit of a compound type electric power receiving and transforming installation in a form of one circuit line and one bank constitution.

In Fig.2, R illustrates a switch gear unit, TR a transformer and S a plurality of switch board clusters each of which is constituted in a form of unit. Further, arrangement, and positions of the respective units are as those illustrated in the drawing. Namely, from one end of the switch gear unit R of substantially rectangular shape the transformer unit TR of substantially rectangular shape is disposed extending in the direction perpendicular to the arrangement direction of the switch gear unit R. Further, from the other end of the switch gear unit R the switch board unit S of substantially rectangular shape is disposed extending in the direction perpendicular to the arrangement direction of the switch gear unit R. Still further, the transformer unit TR and the switch board unit S are disposed at a common longitudinal side of the switch gear unit R.

Further, the PCT in the drawing is usually provided from an electric power supply company and is separately disposed at the illustrated position during installation thereof. Accordingly, a manufacturer transports all together the assembly of the transformer unit TR, the switch board unit S and the switch gear unit R as disposed in the illustrated positional relationship and installs the assembly at the site, and after performing electrical connection at a few portions from the outside the installation can be started.

Within the respective units the following apparatuses as illustrated in Fig.2 are accommodated. For the first time, the switch gear unit R is constituted by such as a cable head CH for taking-in external electric power, disconnecting switches DS and EDS, a circuit breaker GCB and an arrester LA and these apparatuses are disposed in a three-dimensional manner in the unit R of substantially rectangular shape. Inside the transformer unit TR a transformer is accommodated and a unit of substantially rectangular shape is formed. The switch board unit S is constituted by piling up a plurality of switch boards in steps and each of the switch boards accommodates at least a vacuum circuit breaker VCB and supplies electric power to respective loads (not shown). Further, in a case of a compound type electric power receiving and transforming installation for an extra-high voltage consumer, a specific extra-high voltage control pannel and a DC power source unit D which supplies a power source for operating the disconnecting switches DS and EDS or the circuit breaker GCB are disposed at the illustrated positions.

In the present invention, the respective units are disposed as explained above, the installation can be fundamentally started after simply connecting the PCT with the respective units and connecting with the power source and load. Thus the size of the assembled unit of the compound type electric power receiving and transforming installation is reduced to about 3(m)x 5(m). Further, if the PCT is included, the size will be about 5(m) square.

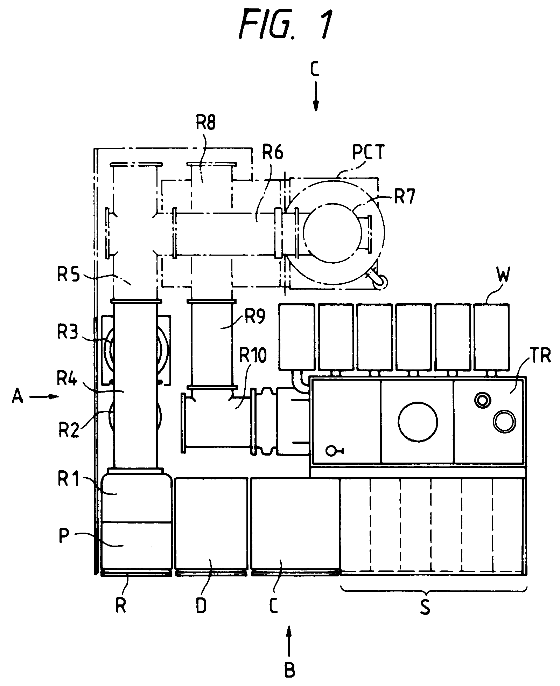

When summing up, the fundamental constitution of the compound type electric power receiving and transforming installation in Fig.2 is provided by disposing closely the transformer units at the back side of the aligned switch board units in the longitudinal direction of the switch board units and the switch gear units in a direction perpendicular to the longitudinal direction of the switch board units in such a manner to form a substantially rectangular shape as a whole, and an example when the primary side of a transformer is constituted, for example, by a gas insulated switch gear device (hereinafter, simply called as GIS) is illustrated in Fig.1.

In Fig.1, the switch gear unit R is constituted by GIS and the switch gear unit R includes disconnecting switches DS and EDS, an operation panel P (of which portion is only excluded from GIS) of the circuit breaker GCB and GIS tanks R1 through R4, R9 and R10. Further, W in Fig.1 is a radiator for cooling the transformer.

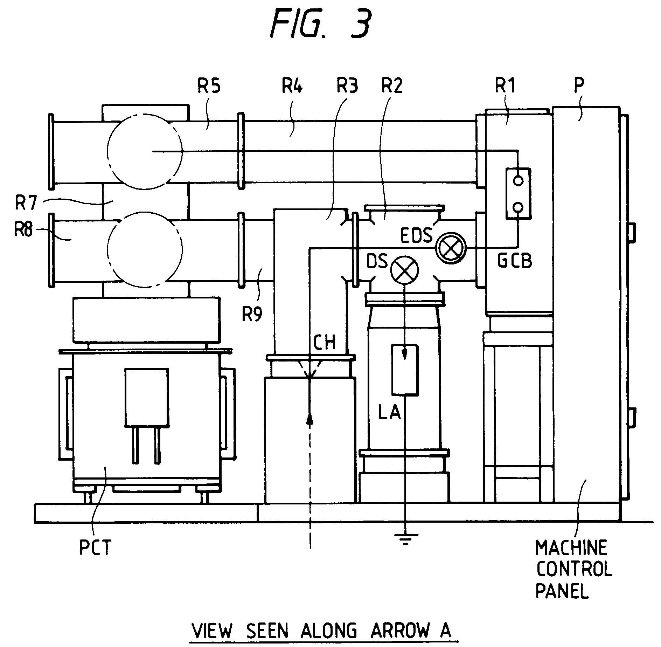

Fig.3 illustrates an arrangement of the GIS tank when looked at along the arrow A in Fig.1 wherein electric power is received from the bottom of the vertical type tank R3 via the cable head CH and is connected to the PCT via the disconnecting switch EDS in the horizontal tank R2, the vertical type circuit breaker GCB in the vertical type tank R1, the connection use horizontal tank R4 provided at the upper space of the tanks R3 and R2, likely the connection use horizontal tanks R5 and R6 (as illustrated in Fig.1) and the vertical tank R7 for connection with the PCT. A part of the vertical tank R7 contains a round trip conductor, and the load side conductor of the PCT is connected to the transformer TR at the bottom of the connection use horizontal tank R6 via the connection use horizontal tank R8 which is perpendicular to tank R6, likely the connection use horizontal tank R9 and likely the connection use horizontal tank R10.

In Fig.1 and Fig.3, the PCT is an apparatus which is provided from an electric power supply company and further, since the tanks R5, R6, R7 and R8 are those for connecting the switch gear unit R with the PCT, the apparatuses (P, R1 through R4, R9 and R10) which constitute the switch gear unit R are separately manufactured from the tanks (R5, R6, R7 and R8) used for connection with the PCT. Further, the apparatuses constituting the switch gear unit R, the transformer unit TR and the switch board unit S are integrally constituted into a unit form and is transported by this unit form. The tanks (R5, R6, R7 and R8) used for connection with the PCT are also manufactured into a unit form and is transported by this unit form.

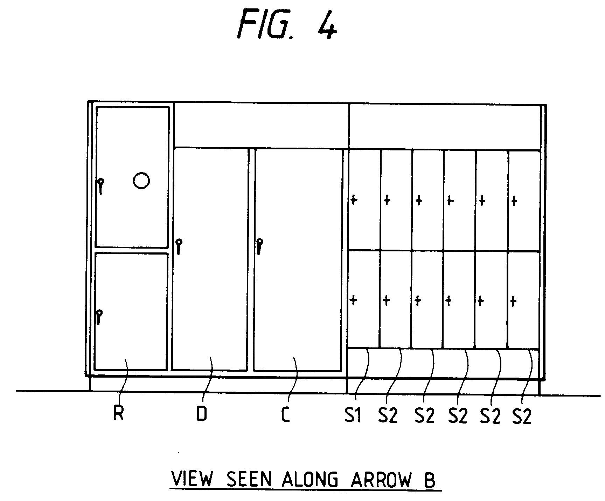

A feature of this constitution according to the present invention is that many kinds of operation panels of the compound type electric power receiving and transforming installation are collected on one face of the unit. Namely, as illustrated in Fig.4, the operation doors of respective kinds of switch boards (the operation panels P of the switch board S, the extra-high voltage operation switch board C, the DC current source unit D and the switch gear unit R) are disposed along B face, through which lay-out freedom for several kinds of constitutions is increased which is explained below. As a result, the location of the PCT can be selected not only along C face but also along A face.

The fundamental constitution of the compound type electric power receiving and transforming installation is explained above. Based on this fundamental constitution many kinds of modifications are possible and the constituent apparatuses can be freely laid-out depending on the customer's site or the costomer's requirement on the facility configuration.

Fig.5 is a view illustrating an electrical circuit of a compound type electric power receiving and transforming installation in a two circuit line and two bank constitution and a major feature of which is that two sets of the fundamental constitutions of the compound type electric power receiving and transforming installation as illustrated in Fig.1 are basically disposed symmetrically while disposing the PCT at the center and using the line Y1-Y2 as a reference for symmetry. Differences of the present constitution from the compound type electric power receiving and transforming installation in one circuit line and one bank constitution as illustrated in Fig.1 are as follows.
(1) Two sets of the fundamental constitutions of the compound type electric power receiving and transforming installation as illustrated in Fig.1 are disposed symmetrically while disposing the PCT at the center and using the line Y1-Y2 as a reference for symmetry.
(2) Between the PCT and the primary circuit of the transformer TR, switch gear units Ra2 and Rb2 are added and in which the disconnecting switch EDS and the circuit breaker GCB are accommodated.
(3) Since it is enough to provide one set of the extra-high voltage operation panel C and the DC power source unit D for a compound type electric power receiving and transforming installation of two circuit line and two bank constitution, the extra-high voltage operation panel C is disposed at a series side and the DC power source unit D is disposed at b series side.

As explained above, a compound type electric power receiving and transforming installation of two circuit line and two bank constitution is realized by disposing two sets of installations shown in Fig.1 while facing the C faces thereof and without changing substantially the fundamental constitution thereof and as will be apparent from the drawing, since the operation doors for the respective series are collectively arranged but separated between series, the operability of the doors is improved.

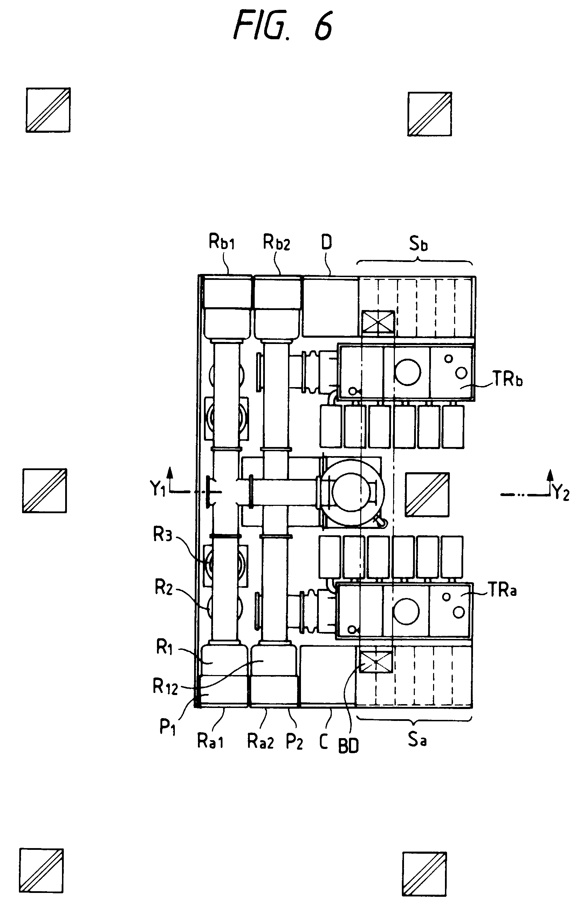

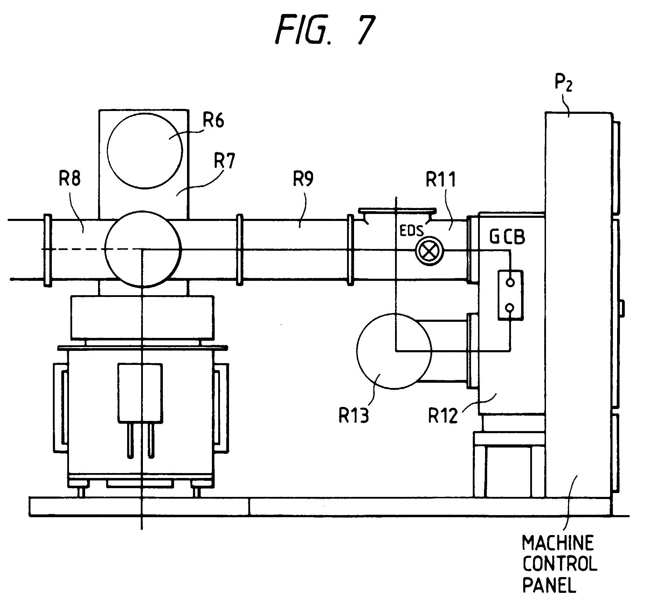

Fig.6 shows an arrangement diagram of the switch gear unit R of the compound type electric power receiving and transforming installation as shown in Fig.5 when the same is constituted by the GIS. Since the total size of this compound type electric power receiving and transforming installation can be reduced to about 8(m)x 5(m), a standard distance between pillars (6(m)), which has to be taken into account when these installations are disposed in buildings, causes no problem for the installation explained above, because the total size is reduced as indicated above and further a countermeasure lay-out is taken in such a manner that a pillar of the building positions at the backward space of the PCT. Defferences between the installation shown in Fig.6 and that shown in Fig.1 and Fig.3 are as follows.
(1) The GIS arrangement at the fore front row, when looked at from A face, is fundamentally the same, however, the C face side of the connection use horizontal tank R5, which is closed in Fig.1 and Fig.3 embodiment, is used for connecting with the connection use horizontal tank R4 for b series. Further, in the switch gear unit Ra1 in Fig.5, the disconnecting switch DES is additionally included at the load side of the circuit breaker GCB, such that the disconnecting switch DES is accommodated in the horizontal tank R4.
(2) The GIS arrangement at the second row, when looked at from A face, is different from Fig.3 embodiment as illustrated in Fig.7. At this second row the constitution that the connection use horizontal tank R6 is connected to the PCT via the vertical tank R7, a round trip conductor is accommodated in a part of the vertical tank R7 and the load side conductor of the PCT is led to the connection use horizontal tank R8, is the same, however, the internal conductor in the connection use horizontal tank R8 is baranched respectively toward a series side and b series side. For the sake of simplifying the explanation, only the a series side is illustarated in Fig.7, wherein the connection use horizontal tank R9 is connected to the transformer via the horizontal tank R11 accommodating the disconnecting switch EDS, the vertical type tank R12 accommodating the circuit breaker GCB and the connection use horizontal tank R13 locating beneath the horizontal tank R11 and crossing perpendicularly therewith. These tanks R9, R11, R12 and R13 correspond to the switch gear unit Ra2 in Fig.5.
(3) The switch boards Sa3 and Sb3 in Fig.5 are connected and a connection use duct BD is provided through which common bus bars can be used for the two sets of the switch boards.

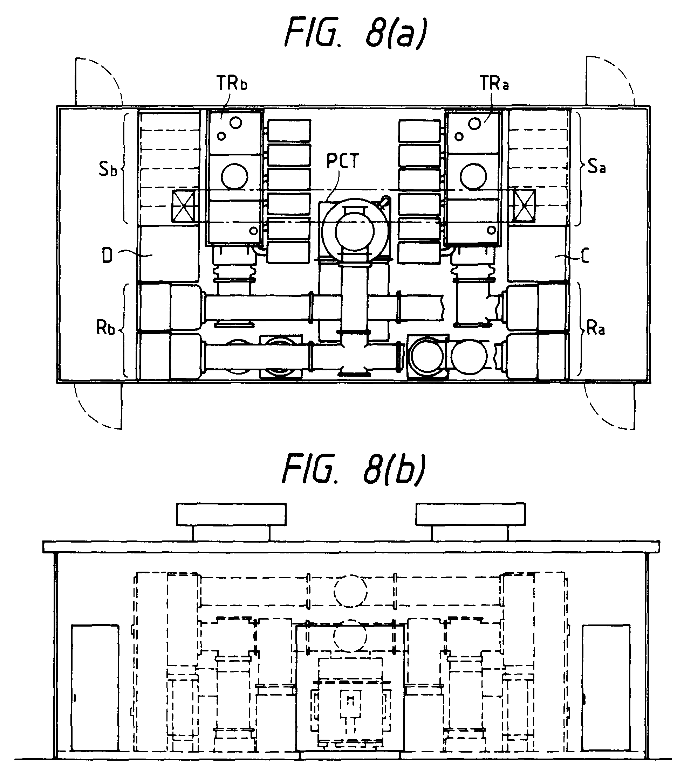

Fig.8 shows an installation lay-out which enables an outdoor installation of the compound type electric power receiving and transforming installation of two circuit line and two bank constitution as shown in Fig.5 which is disposed in a cubicle, and Fig.8(a) shows a plan view thereof and Fig.8(b) shows a front outlook thereof. Since in Fig.6 the operation doors are provided at both right and left sides (B face in Fig.1), passage ways for inspection use are provided at this B face side. The total size of the present compound type electric power receiving and transforming installation is about 8(m) x 11(m).

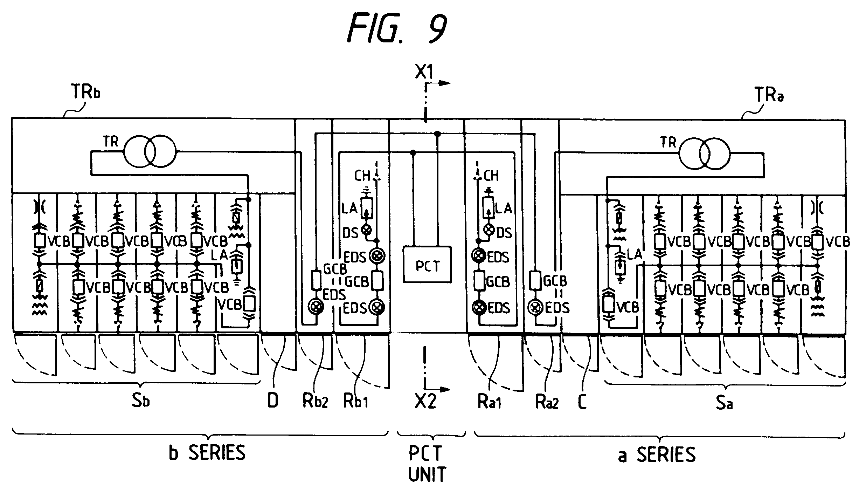

Fig.9 is a diagram illustrating an electrical circuit of a compound type electric power receiving and transforming installation of two circuit line and two bank constitution when the same is arranged linearly and the major feature thereof is that two sets of the fundamental constitutions of the compound type electric power receiving and transforming installation as shown in Fig.1 are basically disposed symmetrically while placing the A faces at the center and using the line X1-X2 as a reference for symmetry. Further, between the facing A faces the PCT is disposed. Differences of this linearly arranged compound type electric power receiving and transforming installation from the compound type electric power receiving and transforming installation of one circuit line and one bank constitution as shown in Fig.1 are as follows.
(1) The two sets of the fundamental constitutions of the compound type electric power receiving and transforming installation as shown in Fig.1 are disposed symmetrically while placing the A faces at the center and using the line X1-X2 as a reference for symmetry.
(2) Between the two facing A faces the PCT is disposed.
(3) Between the PCT and the primary circuit of the transformer TR the switch gear units Ra2 and Rb2 are added and in which the disconnecting switch EDS and the circuit breaker GCB are accommodated.
(4) Since it is enough to provide one set of the extra-high voltage operation panel C and the DC power source unit D for a compound type electric power receiving and transforming installation of two circuit line and two bank constitution, the extra-high voltage operation panel C is disposed at a series side and the DC power source unit D is disposed at b series side.
(5) As a result of the above lay-out, all of the operation doors for a series and b series are collected on the same face.

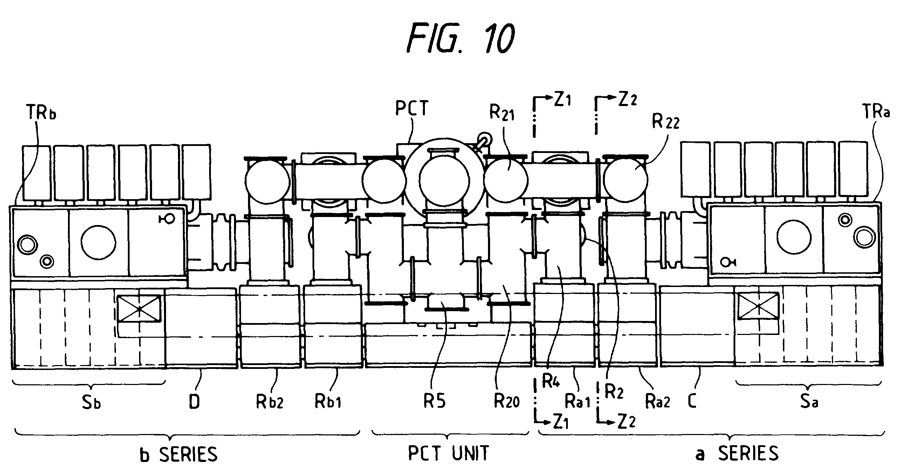

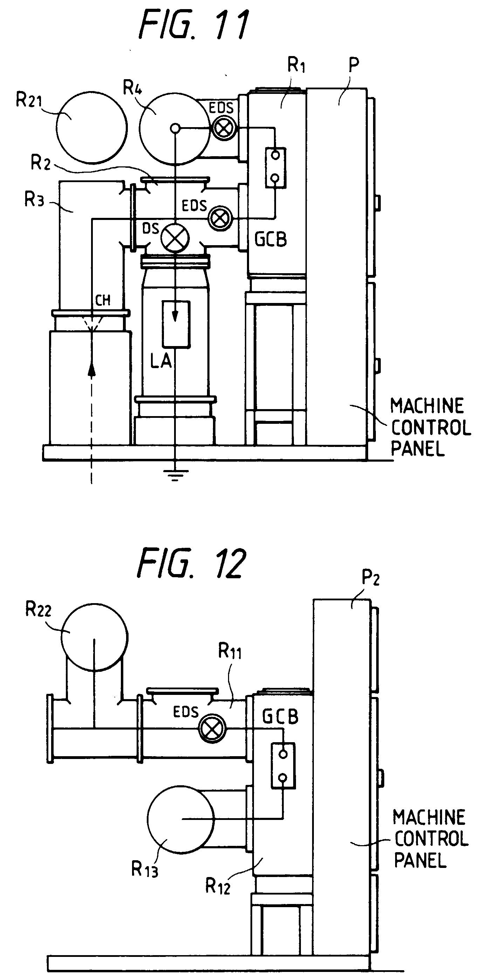

As explained above, a linearly arranged compound type electric power receiving and transforming installation of two circuit line and two bank constitution is realized by disposing two sets of installations shown in Fig.1 while facing the C faces thereof and without changing substantially the fundamental constitution thereof and as will be apparent from the drawing, since all of the operation doors are collectively arranged, the operability of the doors is improved. Fig.10 shows an arrangement diagram of the switch gear unit R for the linearly arranged compound type electric power receiving and transforming installation as shown in Fig.9 when the same is constituted by the GIS. As will be apparent from the drawing, the PCT is disposed at the center thereof and at both sides thereof two sets of compound type electric power receiving and transforming installations are provided. In this linearly arranged compound type electric power receiving and transforming installation, the GIS constitutions (Ra1 and Ra2) of the switch gear units for respective series can be realized without substantially changing the fundamental constitution. Fig.11 and Fig.12 illustrate the GIS constitutions of the switch gear units R for the respective series as shown in Fig.10 and differences of this GIS constitution from the GIS constitution of the switch gear unit R as shown in Fig.1 and Fig.3 are as follows.
(1) Fig.11 illustrates an arrangement diagram when looked at the GIS arrangement Ra1 as shown in Fig.10 from the cross section line Z1-Z1 and the arrangement is fundamentally the same as that shown in Fig.3. Further, since in the switch gear unit Ra1 as shown in Fig.9 the disconnecting switch EDS is additionally included at the load side of the circuit breaker GCB, the disconnecting switch EDS is accommodated in the horizontal tank R4 as shown in Fig.11. The horizontal tank R4 is bent into front ward in Fig.11 at above the vertical type tank R2 and is connected to the horizontal tank R20 for the PCT part as shown in Fig.10. Further, the horizontal tank R20 extends to the PCT via the tank R5 as shown in Fig.10. Still further, a conduit tank R21 for a return conductor from the PCT part as shown in Fig.10 extends into backward in Fig.11 at above the vertical type tank R3.
(2) Fig.12 shows an arrangement diagram of the GIS arrangement as shown in Fig.10 when looked at from the cross sectional line Z2-Z2, and the arrangement is fundamentally the same as that of the GIS arrangement Ra2 for two circuit line and two bank constitution as shown in Fig.7. However, only difference is that the tank R22 which is connected to the conduit tank R21 for the return conductor from the PCT part shown in Fig.10 is used in place of the horizontal tank R9.

Finally the GIS constitution for the PCT part is explained. As explained above in connection with Fig.10, the tank R4 of the switch gear unit Ra1 reaches to the PCT via the tanks R20 and R5.

The return conduit from the PCT reaches to the vertical type tank R21 via the space under the tanks R20 and R5, and further reaches to the GIS arrangement Ra2 while crossing over the GIS arrangement Ra1.

Since the total size of this compound type electric power receiving and transforming installation is reduced to about 13(m)x 3(m), the standard distance (6(m)) between pillars of a building, which has to be taken into account when the installation is disposed in a building, causes no problems for the present embodiment.

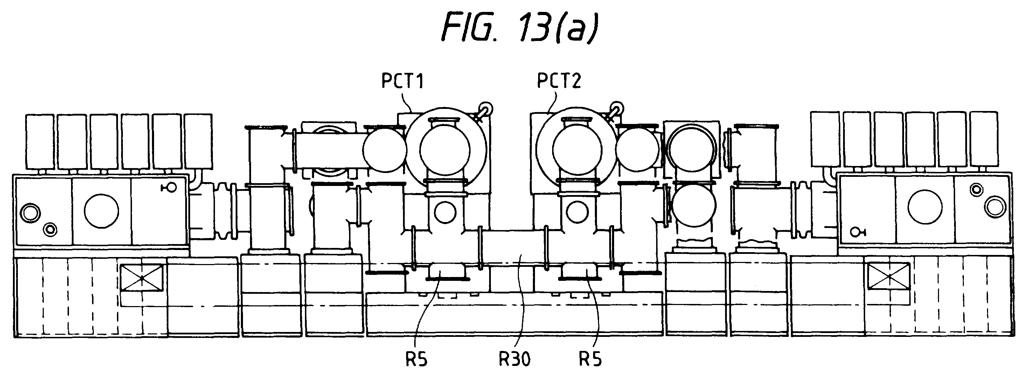

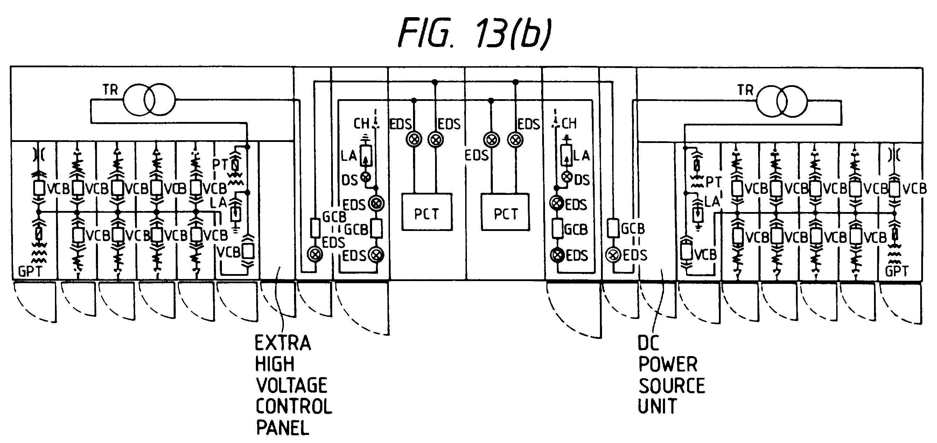

Fig.13 shows a modified embodiment of the linearly arranged compound type electric power receiving and transforming installation as shown in Fig.9 and Fig.10. Although Fig.9 and Fig.10 embodiment is a two circuit line, two tank and one PCT system, Fig.13 modified embodiment is a two circuit line, two bank and two PCT system. Namely, two sets of PCT1 and PTC2 are disposed in parallel and are connected via a tank R30 as well as disconnecting switches EDS necessary in this instance are disposed in the tank R5.

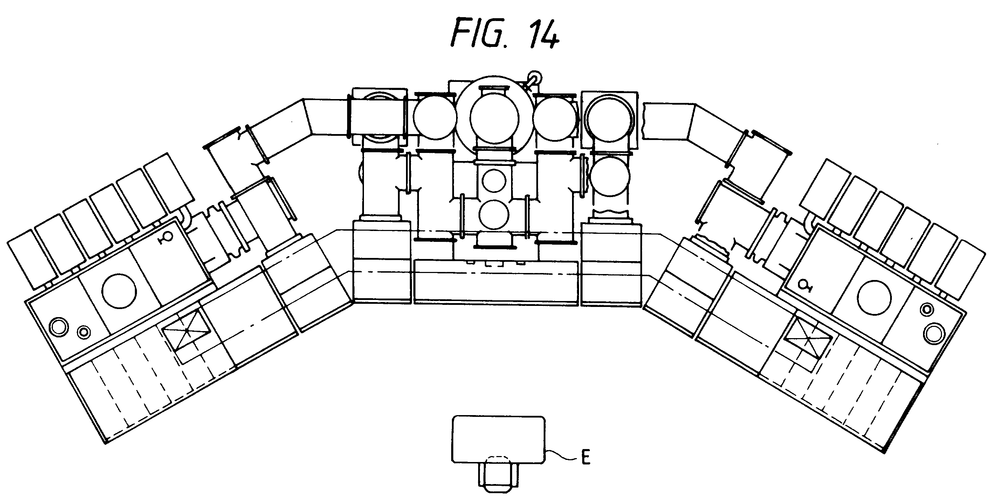

Fig.14 is a modification of the linearly arranged compound type electric power receiving and transforming installation as shown in Fig.13 and Fig.10 wherein the operation panels are arranged in a fan shaped arcuate line in order to facilitate operation and monitoring of an operator and a console E for operation of the operator is disposed at the center of the fan shaped arc to enable a remote control. In this modification, proper alarming display units are provided at several places on the operation panels and such as a CRT is provided at the console E.

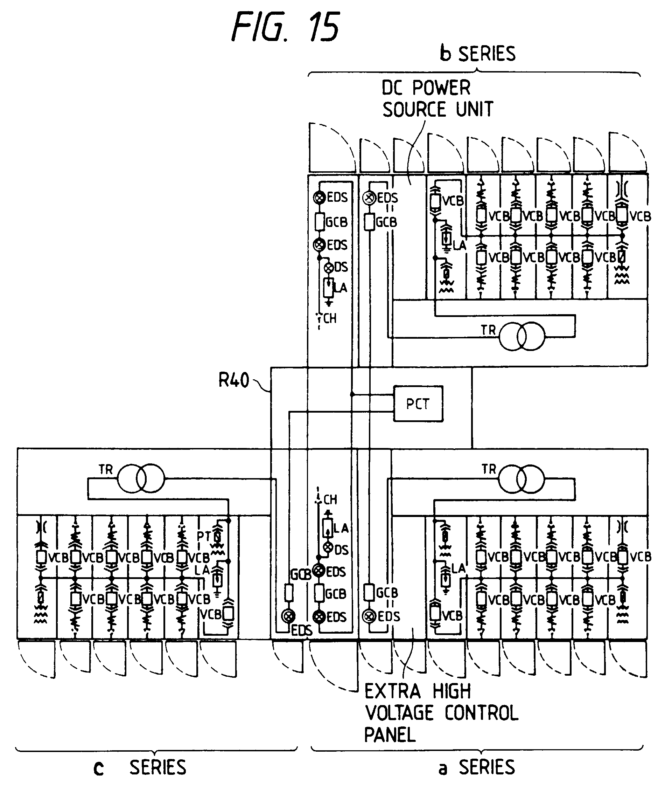

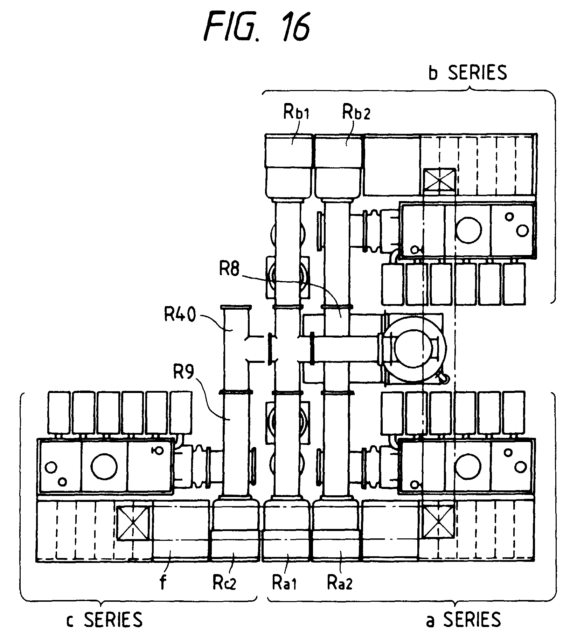

Fig.15 and Fig.16 respectively show an electrical circuit diagram of an example when the fundamental constitution as shown in Fig.1 is applied to a two circuit line and three bank system and a diagram when the same is constituted by the GIS. In Fig.16, the constitutions for a and b series are substantially the same as those shown in Fig.6. The c series is constituted by the GISRb2, the switch board Sb and the transformer TRb for b series in Fig.6, is newly provided with a tank R40 connected to the tank R9 and is simply connected to the conductor in the tank R8 as shown in Fig.6. Further, the portion f which corresponds to one for the extra-high voltage operation panel C or for the DC power source unit D is not necessary in the present embodiment and is remained as an empty space or, if required, the space can be used for an auxiliary switch board.

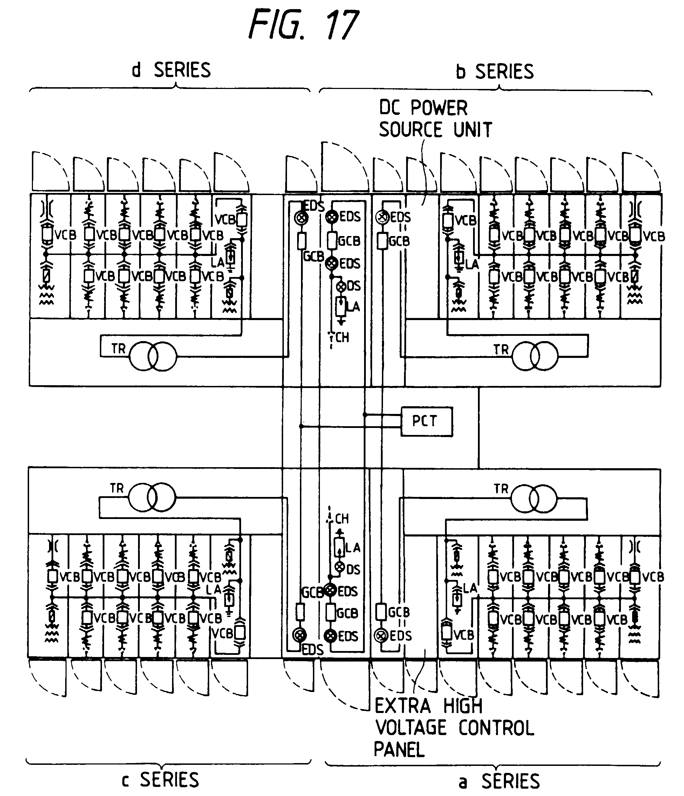

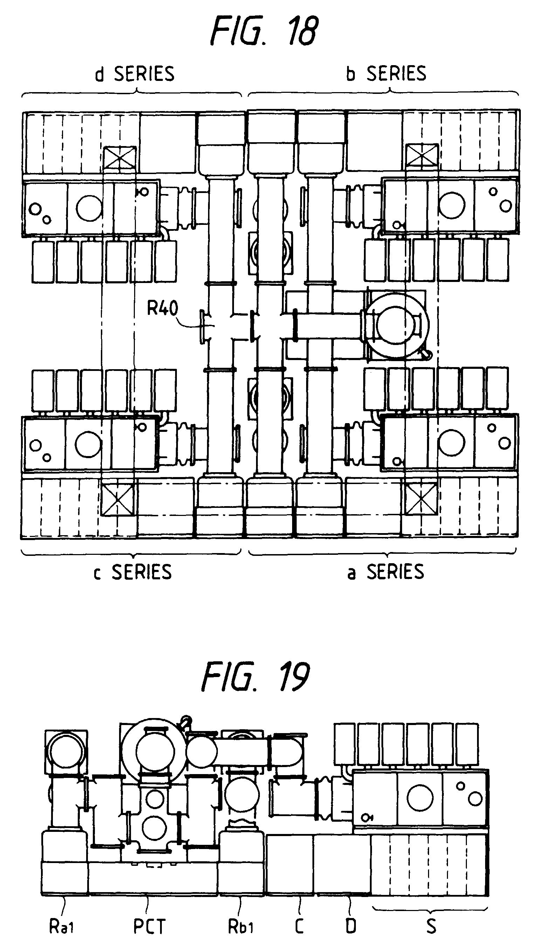

Fig.17 and Fig.18 respectively show an electrical circuit diagram of an example when the fundamental constitution as shown in Fig.1 is applied to a two circuit line and four bank system and a diagram when the same is constituted by the GIS. In Fig.18 the constitutions for a and b series are substantially the same as those shown in Fig.6. The d series employs totally the identical constitution as that of series c in Fig.16, is newly provided with the tank R40 connected to the tank R9 and is simply connected to the conductor in the tank R8 each other as shown in Fig.6. Further, the portion f which corresponds to one for the extra-high voltage operation panel C or for the DC power source unit D is not necessary in the present embodiment and is remained as an empty space or, if required, the space can be used for an auxiliary switch board.

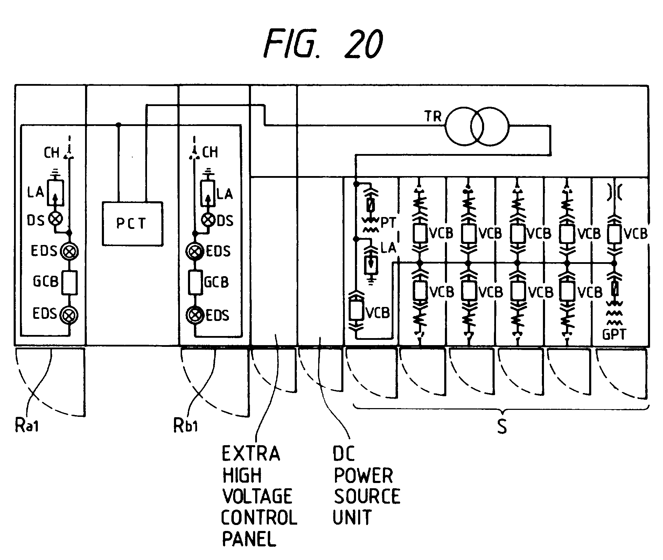

Fig.19 and Fig.20 respectively show a diagram of an example when the fundamental constitution as shown in Fig.1 is applied to a two circuit line and one bank system and constituted by the GIS and the electric circuit diagram thereof. The present arrangement corresponds to one shown in Fig.10 while only leaving the GIS arrangement Rb1 of b series and further excluding the GIS arrangement of a series.

In the present invention, the fundamental constitution for the one circuit line and one bank system is always utilized, and many kinds of modifications thereof can be realized, accordingly a compound type electric power receiving and transforming installation can be obtained which can be freely laid out depending on, in particular, a customer's site and a customer's requirement with regard to facility configuration.

## Claims

1. A compound type electric power receiving and transforming installation unit comprising a plurality of switch boards (S) a transformer unit (TR) and a switchgear unit (R) CHARACTERISED IN THAT said unit has a substantially rectangular shape as a whole, doors of said plurality of switch boards (s) being disposed along a common first surface, transformer unit (TR) being disposed along a second surface opposite said first surface, and said switch gear unit (R) being disposed along a third surface perpendicular to said first surface.

2. A compound type electric power receiving and transforming installation comprising one compound type electric power receiving and transforming installation unit as defined in claim 1.

3. A compound type electric power receiving and transforming installation comprising two sets of compound type electric power receiving and transforming installation units each as defined in claim 1, wherein
the two transformer units (TRa, TRb) are disposed so as to face each other and the two switch gear units (Ra, Rb) are disposed in common along said third surface.

4. The installation of claim 3, including an electric energy measuring apparatus (PCT) disposed between the two transformer units (TRa, TRb).

5. The installation of claim 3 or 4, wherein said compound type electric power receiving and transforming installation units are accommodated in a cubicle and a passage way therefor is provided along said first surface.

6. The installation of any one of claims 2 to 5, wherein said compound type electric power receiving and transforming installation units are accommodated in a building and an electric energy measuring apparatus (PCT) is disposed with respect to pillars of said building in such a manner that said electric energy measuring apparatus (PCT) is located on one side of said switch gear units (Ra, Rb) and said pillars are located on the other side of said switch gear units (Ra, Rb).

7. A compound type electric power receiving and transforming installation comprising two sets of compound type electric power receiving and transforming installation units each defined in claim 1, wherein
the two switch gear units (Ra, Rb) are disposed so as to face each other, an electric energy measuring apparatus (PCT) is disposed between said switch gear units (Ra, Rb), and the door side faces of the switch boards (Sa, Sb) of both sets are arranged along a common surface.

8. The installation of claim 7, wherein two sets of electric energy measuring apparatus (PCT) are disposed between said switch gear units (Ra, Rb).

9. The installation of claim 7 or 8, wherein said common surface defines a plurality of planes according to a fan-shaped arrangement of said sets.

10. A compound type electric power receiving and transforming installation comprising three sets of compound type electric power receiving and transforming installation units each as defined in claim 1, wherein the transformer units (TRa, TRb) of said first and second sets are disposed so as to face each other, an electric energy measuring apparatus (PCT) is disposed between said transformer units (TRa, TRb), said switch gear units (Ra, Rb) of said first and second sets are disposed along a common third surface perpendicular to said first surface, said switch gear units (Ra, Rc) of said first and third sets are disposed so as to face each other, and the door side faces of the switch boards (Sa, Sc) of said first and third sets are arranged on a common side.

11. A compound type electric power receiving and transforming installation comprising four sets of compound type electric power receiving and transforming installation units each as defined in claim 1, wherein the transformer units (TRa, TRb; TRc, TRd) of two of said four sets are disposed so as to face each other, an electric energy measuring apparatus (PCT) is disposed between two of said transformer units (TRa, TRb), and the switch gear units (Ra, Rc; Rb, Rd) of two sets are disposed so as to face hose of the other two sets.

## Patentansprüche

1. Bauteileinheit zum Aufnehmen und Transformieren elektrischer Energie mit
einer Vielzahl von Schalttafeln (S), einer Transformatoreinheit (TR) und einer Schalteinheit (R),
**dadurch gekennzeichnet**, daß
die Bauteileinheit insgesamt eine im wesentlichen rechteckige Form aufweist, wobei die Eingänge der Vielzahl von Schalttafeln (S) längs einer gemeinsamen ersten Oberfläche angeordnet sind, die Transformatoreinheit (TR) längs einer der ersten Oberfläche gegenüberliegenden zweiten Oberfläche angeordnet ist und die Schalteinheit (R) längs einer zur ersten Oberfläche senkrechten dritten Oberfläche angeordnet ist.

2. Zusammengesetzte Anlage zum Empfangen und Transformieren elektrischer Energie mit einer Bauteileinheit zum Empfangen und Transformieren elektrischer Energie gemäß Anspruch 1.

3. Zusammengesetzte Anlage zum Empfangen und Transformieren elektrischer Energie mit zwei Sätzen von Bauteileinheiten zum Empfangen und Transformieren elektrischer Energie gemäß Anspruch 1, wobei die zwei Transformatoreinheiten (TRa, TRb) einander gegenüberliegend angeordnet sind und die zwei Schalteinheiten (Ra, Rb) gemeinsam längs der dritten Oberfläche angeordnet sind.

4. Anlage gemäß Anspruch 3, mit einer Vorrichtung zum Messen elektrischer Energie (PCT), die zwischen den zwei Transformereinheiten (TRa, TRb) angeordnet ist.

5. Anlage gemäß Anspruch 3 oder 4, wobei die Bauteileinheiten zum Empfangen und Transformieren elektrischer Energie in einer Zelle untergebracht sind und ein Zugang hierzu längs der ersten Oberfläche vorgesehen ist.

6. Anlage gemäß einem der Ansprüche 2 bis 5, wobei die Bauteileinheiten zum Empfangen und Transformieren elektrischer Energie in einem Gebäude untergebracht sind und eine Vorrichtung zum Messen elektrischer Energie (PCT) in bezug auf die Gebäudepfeiler auf eine solche Weise angeordnet ist, daß die Vorrichtung zum Messen elektrischer Energie (PCT) sich auf der einen Seite der elektrischen Schalteinheiten (Ra, Rb) und die Pfeiler sich auf der anderen Seite der elektrischen Schalteinheiten (Ra, Rb) befinden.

7. Zusammengesetzte Anlage zum Empfangen und Transformieren elektrischer Energie mit zwei Sätzen von Bauteileinheiten zum Empfangen und Transformieren elektrischer Energie gemäß Anspruch 1, wobei die zwei Schalteinheiten (Ra, Rb) einander gegenüberliegend angeordnet sind, eine Vorrichtung zum Messen elektrischer Energie (PCT) zwischen den Schalteinheiten (Ra, Rb) angeordnet ist, und die Eingangsseitenflächen der Schalttafeln (Sa, Sb) beider Sätze längs einer gemeinsamen Oberfläche angeordnet sind.

8. Anlage gemäß Anspruch 7, wobei zwei Sätze von Vorrichtungen zum Messen elektrischer Energie (PCT) zwischen den Schalteinheiten (Ra, Rb) angeordnet sind.

9. Anlage gemäß Anspruch 7 oder 8, wobei die gemeinsame Oberfläche eine Vielzahl von Ebenen für eine fächerförmige Anordnung der Sätze festlegen.

10. Zusammengesetzte Anlage zum Empfangen und Transformieren elektrischer Energie mit drei Sätzen von Bauteileinheiten zum Empfangen und Transformieren elektrischer Energie gemäß Anspruch 1, wobei
die Transformatoreinheiten (TRa, TRb) der ersten und zweiten Sätze einander gegenüberliegend angeordnet sind, eine Vorrichtung zum Messen elektrischer Energie (PCT) zwischen den Transformatoreinheiten (TRa, TRb) angeordnet ist, die Schalteinheiten (Ra, Rb) der ersten und der zweiten Sätze längs einer gemeinsamen dritten Oberfläche, die senkrecht zur ersten Oberfläche ist, angeordnet sind, die Schalteinheiten (Ra, Rc) der ersten und dritten Sätze einander gegenüberliegend angeordnet sind, und die Eingangsseitenfläche der Schalttafeln (Sa, Sc) der ersten und der dritten Sätze auf einer gemeinsamen Seite angeordnet sind.

11. Zusammengesetzte Anlage zum Empfangen und Transformieren elektrischer Energie mit vier Sätzen von Bauteileinheiten zum Empfangen und Transformieren elektrischer Energie gemäß Anspruch 1, wobei
die Transformatoreinheiten (TRa, TRb; TRc, TRd) von zwei der vier Sätze einander gegenüberliegend angeordnet sind, eine Vorrichtung zum Messen elektrischer Energie (PCT) zwischen zwei der Transformatoreinheiten (TRa, TRb) angeordnet ist, und die Schalteinheiten (Ra, Rc; Rb, Rd) von zwei Sätzen so angeordnet sind, daß sie den anderen zwei Sätzen gegenüber liegen.

## Revendications

1. Unité d'installation de type combiné de réception et de transformation d'énergie électrique, comportant une pluralité de tableaux de commande (S), une unité de transformation (TR) et une unité de commutation (R), caractérisée en ce que ladite unité a globalement une forme sensiblement rectangulaire, les portes des tableaux de commande de ladite pluralité de tableaux de commande étant disposées le long d'une première surface commune, l'unité de transformation (TR) étant disposée le long d'une deuxième surface opposée à ladite première surface, et ladite unité de commutation (R) étant disposée le long d'une troisième surface perpendiculaire à ladite première surface.

2. Installation de type combiné de réception et de transformation d'énergie électrique de type combiné comprenant une unité d'installation de réception et de transformation d'énergie électrique telle que définie dans la revendication 1.

3. Installation de type combiné de réception et de transformation d'énergie électrique comprenant deux ensembles d'unités d'installations de type combiné de réception et de transformation d'énergie électrique chacune telle que définie dans la revendication 1, dans laquelle
les deux unités de transformation (TRa, TRb) sont disposées en vis-à-vis l'une de l'autre et les deux unités de commutation (Ra, Rb) sont disposées en commun le long de ladite troisième surface.

4. Installation selon la revendication 3, comportant un appareil de mesure d'énergie électrique (PCT) disposé entre les deux unités de transformation (TRa, TRb).

5. Installation selon la revendication 3 ou 4, dans laquelle lesdites unités d'installations de type combiné de réception et de transformation d'énergie électrique sont disposées dans un local, et une voie d'accès à celles-ci est prévue le long de ladite première surface.

6. Installation selon l'une quelconque des revendications 2 à 5, dans laquelle lesdites unités d'installations de type combiné de réception et de transformation d'énergie électrique sont disposées dans un bâtiment, et un appareil de mesure d'énergie électrique (PCT) est disposé par rapport aux piliers de soutènement dudit bâtiment de telle sorte que ledit appareil de mesure d'énergie électrique (PCT) soit situé d'un premier côté desdites unités de commutation (Ra, Rb) et de telle sorte que lesdits piliers de soutènement soient situés de l'autre côté desdites unités de commutation (Ra, Rb).

7. Installation de type combiné de réception et de transformation d'énergie électrique comprenant deux ensembles d'unités d'installations de type combiné de réception et de transformation d'énergie électrique chacune telle que définie dans la revendication 1, dans laquelle
les deux unités de commutation (Ra, Rb) sont disposées en vis-à-vis l'une de l'autre, un appareil de mesure d'énergie électrique (PCT) est disposé entre lesdites unités de commutation (Ra, Rb), et les faces latérales des portes des tableaux de commande (Sa, Sb) des deux ensembles sont agencées le long d'une surface commune.

8. Installation selon la revendication 7, dans laquelle deux ensembles d'appareils de mesure d'énergie électrique (PCT) sont disposés entre lesdites unités de commutation (Ra, Rb).

9. Installation selon la revendication 7 ou 8, dans laquelle ladite surface commune définit une pluralité de plans correspondant à un agencement en éventail desdits ensembles.

10. Installation de type combiné de réception et de transformation d'énergie électrique comprenant trois ensembles d'unités d'installation de type combiné de réception et de transformation d'énergie électrique, chacune telle que définie dans la revendication 1, dans laquelle
les unités de transformation (TRa, TRb) desdits premier et deuxième ensembles sont disposées en vis-à-vis l'une de l'autre, un appareil de mesure d'énergie électrique (PCT) est disposé entre lesdites unités de transformation (TRa, TRb), lesdites unités de commutation (Ra, Rb) desdits premier et deuxième ensembles sont disposées le long d'une troisième surface commune perpendiculaire à ladite première surface, lesdites unités de commutation (Ra, Rc) desdits premier et troisième ensembles sont disposés en vis-à-vis l'une de l'autre, et les faces latérales des portes des tableaux de commande (Sa, Sc) desdits premier et troisième ensembles sont agencées sur un côté commun.

11. Installation de type combiné de réception et de transformation d'énergie électrique, constituée de quatre ensembles d'unités d'installations de type combiné de réception et de transformation d'énergie électrique chacune telle que définie dans la revendication 1, dans laquelle
les unités de transformation (TRa, TRb; TRc, TRd) de deux desdits quatre ensembles sont disposées en vis-à-vis l'une de l'autre, un appareil de mesure d'énergie électrique (PCT) est disposé entre deux desdites unités de transformation (TRa, TRb), et les unités de commutation (Ra, Rc; Rb, Rd) de deux ensembles sont disposés en vis-à-vis de celles des deux autres ensembles.
